# EUROPEAN PATENT SPECIFICATION

(11) **EP 4 115 999 B1**
(45) Date of publication and mention of the grant of the patent: **12.02.2025**
(21) Application number: 21764783.3
(22) Date of filing: 15.02.2021
(51) Int. Cl.: B09B 3/00, B09B 5/00, C22B 1/02, C22B 7/00, C22B 15/00, C22B 23/02, B02C 13/16, H01M 10/54, B09B 3/35, B09B 3/40, B09B 3/70, B09B 101/16, B02C 13/28

(54) **METHOD FOR RECOVERING VALUABLE METALS FROM WASTE BATTERY**
VERFAHREN ZUR RÜCKGEWINNUNG VON WERTMETALLEN AUS EINER ABFALLBATTERIE
PROCÉDÉ DE RÉCUPÉRATION DE MÉTAUX PRÉCIEUX À PARTIR DE BATTERIES USAGÉES

(30) Priority: 06.03.2020 JP 2020039181
(43) Date of publication of application: 11.01.2023
(73) Proprietor: SUMITOMO METAL MINING CO., LTD., Tokyo 105-8716 (JP)
(72) Inventor: ISEKI, Takashi, Niihama-shi, Ehime 792-0002 (JP)
(74) Representative: Jones, Nicholas Andrew
(86) International application number: PCT/JP2021/005424
(87) International publication number: WO 2021/177005

(56) References cited:
- JP-A- 2013 146 701
- JP-A- 2013 146 701
- JP-A- 2019 135 321
- JP-A- 2019 135 321
- JP-A- H06 346 160
- US-A1- 2009 314 134
- US-A1- 2019 386 354

## Description

### TECHNICAL FIELD

The present invention relates to a method for recovering a valuable metal contained in a waste battery.

### BACKGROUND ART

Recently, lithium-ion batteries have become popular as secondary batteries which are light and have large output. As a basic structure of the lithium-ion battery, a negative electrode current collector made of copper foil and a positive electrode current collector made of aluminum foil are placed inside an exterior can made of metal such as aluminum or iron.

A negative electrode active material such as graphite is fixed to the surface of the negative electrode current collector to constitute a negative electrode material. Further, a positive electrode active material such as lithium nickel oxide or lithium cobalt oxide is fixed to the surface of the positive electrode current collector to constitute a positive electrode material. The negative electrode material and the positive electrode material are placed into the above-described exterior can via a separator made of a porous resin film or the like of polypropylene, and a gap among them is filled with an electrolytic solution or the like containing an electrolyte such as lithium hexafluoride phosphate (LiPF₆).

Lithium-ion batteries are now increasingly used as in-vehicle batteries in hybrid vehicles, electric vehicles, etc. However, a lithium-ion battery mounted on an automobile gradually degrades as the battery is used over a long period of time, and finally the end of the service life comes and the battery is discarded.

As the power of automobiles changes from gasoline to electricity, an increasing number of batteries used in automobile applications will result in an increasing number of batteries disposed of at the same time.

Many attempts and concrete proposals to reuse such discarded lithium-ion batteries, or defective products generated during the manufacture of lithium-ion batteries (hereinafter collectively referred to as "waste batteries") as a resource, have been conventionally made. Then, in many of the attempts, a dry smelting process including charging the waste lithium-ion batteries into a high-temperature furnace to melt an entire amount thereof is a mainstream.

Here, waste batteries include elements that are not a commercial target of recovery such as carbon, aluminum, fluorine, and phosphorus (hereinafter, collectively referred to as "impurities"), in addition to elements commercially valuable in reuse (hereinafter, these are referred to as "valuable metals"), such as nickel, cobalt, and copper. When valuable metals are recovered from waste batteries, it is necessary to efficiently separate the above-mentioned impurities from valuable metals.

For this reason, valuable metals are recovered by a method in which waste batteries are roasted and subjected to a detoxification treatment for removing fluorine, phosphorus, and the like, followed by crushing and pulverization, then a crushed or pulverized product is fractionated using a sieving machine or a magnetic sorter, and valuable metals are recovered from the fractionated product by using the above-described dry smelting process (hereinafter, simply referred to as "dry treatment") or a wet smelting process (hereinafter, simply referred to as "wet treatment") including separating using a liquid such as an acid or an organic solvent.

As a method for recovering cobalt which is a valuable metal from waste batteries by dry treatment, for example, Patent Document 1 proposes a process in which a waste lithium-ion battery is charged into a melting furnace and oxygen is blown to oxidize.

Patent Document 2 proposes a process in which a waste lithium-ion battery is melted, slag is separated, a valuable substance is recovered, and then a lime-based solvent (flux) is added to remove phosphorus.

Further, as a method for recycling a battery pack including an assembled battery in which a plurality of unit cells are connected in series, a control unit for controlling the assembled battery, and further having a component made of a resin, Patent Document 3 discloses a method including roasting the battery pack containing the assembled battery in a charged state as it is, and completely burning unburned pyrolysis gas generated during the roasting of the battery pack. In the method, the roasting temperature in the step of roasting is set to between the carbonization temperature of the resin of the resin component and the melting point of a metal component of the battery pack or less, and the assembled battery in the battery pack is roasted under a non-oxidizing atmosphere or a reducing atmosphere.

However, these methods have a problem that a large cost is required for the process of dehydration or drying, and also for the apparatus body and maintenance of the apparatus. In particular, when an appropriate size of crushing cannot be maintained in waste battery crushing, separation of fine powder, to which a large amount of valuable metals is distributed, and a lump including a large amount of impurities may not be satisfactory, which results in a lowered recovery rate of valuable metals in some cases.

Patent Document 1: Japanese Unexamined Patent Application, Publication No. 2013-091826
Patent Document 2: Japanese Unexamined Patent Application (Translation of PCT Application), Publication No. 2013-506048
Patent Document 3: Japanese Unexamined Patent Application, Publication No. 2010-3512

Further reference is also made to the disclosure of US 2009/314134 A1, JP 2013 146701 A and JP 2019 135321 A.

### DISCLOSURE OF THE INVENTION

### Problems to be Solved by the Invention

In view of such circumstances, it is an object of the present invention to provide a method for recovering a valuable metal contained in a waste battery, the method being capable of efficiently recovering the valuable metal while suppressing a decrease in a recovery rate.

### Means for Solving the Problems

The present inventors have conducted intensive studies in order to solve the aforementioned problems. As a result, it has been found that a valuable metal can be efficiently recovered by subjecting a roasted material obtained by roasting a waste battery to a crushing treatment for crushing using a chain mill, and thereby completing the present invention.

The invention relates to a method in accordance with claim 1. Dependent claims refer to preferred embodiments of the invention.

In particular, the present invention relates to a method for recovering a valuable metal from a waste battery, including roasting a waste battery, placing a roasted material into a crushing container and crushing the roasted material using a chain mill, and sieving a crushed material to separate into an oversize material and an undersize material, in which the chain mill used in a crushing treatment in the crushing step includes: a rotary shaft rod provided vertically with respect to a bottom surface of the crushing container, and a chain mounted to a side surface of the rotary shaft rod, and the chain mill has a structure in which a mounting height of the chain in the rotary shaft rod is adjustable.

According to the present invention, the chain provided in the chain mill is mounted to a mounting position located at a distance in a range of 10 mm or more and 100 mm or less from the bottom surface of the crushing container.

According to a particular embodiment of the present invention, the chain mill is provided with two or more mounting positions in a rotational direction thereof on the side surface of the rotary shaft rod, and the chain is mounted to each of the mounting positions.

According to another embodiment of the present invention, it further includes oxidizing and roasting the undersize material, and reducing and melting an oxidized and roasted material to obtain slag and an alloy containing the valuable metal.

According to another embodiment, the valuable metal includes at least one or more selected from the group consisting of cobalt, nickel, and copper.

### Effects of the Invention

According to the present invention, when recovering a valuable metal from a waste battery, it is possible to efficiently recover the valuable metal, while suppressing a decrease in a recovery rate thereof.

### BRIEF DESCRIPTION OF THE DRAWINGS

FIG. 1 is a process diagram illustrating an example of a flow of a valuable metal recovery method; and
FIG. 2 is a diagram for explaining a crushing treatment using a chain mill.

### PREFERRED MODE FOR CARRYING OUT THE INVENTION

Hereinafter, specific embodiments of the present invention (hereinafter, referred to as "present embodiments") will be described in detail. Incidentally, the present invention is not limited to the following embodiment, and various modifications can be made without departing from the scope of appended claims.

### <<1. Summary of Method for Recovering Valuable Metal>>

The method for recovering a valuable metal according to the present embodiment is a method for recovering a valuable metal from a waste battery. In general, when recovering a valuable metal from a waste battery, a wet treatment may be performed in some cases in addition to a dry treatment, but the method for recovering a valuable metal according to the present embodiment is mainly related to the dry treatment.

Specifically, this method for recovering a valuable metal is characterized in that a waste battery is roasted for detoxification, and then an obtained roasted material is placed into a crushing container to perform a crushing treatment using a chain mill. A crushed material obtained through the crushing treatment is subjected to a sieving treatment to separate the crushed material into an undersize material, which is a powdery material (powder-like material) to which the valuable metal is mainly distributed, and an oversize material containing impurities.

According to such a method, by performing the crushing treatment on the roasted material using a chain mill, it is possible to efficiently obtain a powdery crushed material that mainly contains the valuable metal, and it is possible to effectively recover the valuable metal from the powdery undersize material after a sieving treatment.

The waste battery is a concept which includes used secondary batteries such as used lithium-ion batteries, defective products generated during the production process of a positive electrode material or the like of secondary batteries, a residue in the production process, and a waste material such as scrap generated during the production process of lithium-ion batteries. Such waste batteries include economically valuable metals which can be reused by recovery as described above such as nickel, cobalt, copper, and the like.

### <<2. Regarding Steps of Valuable Metal Recovery Method>>

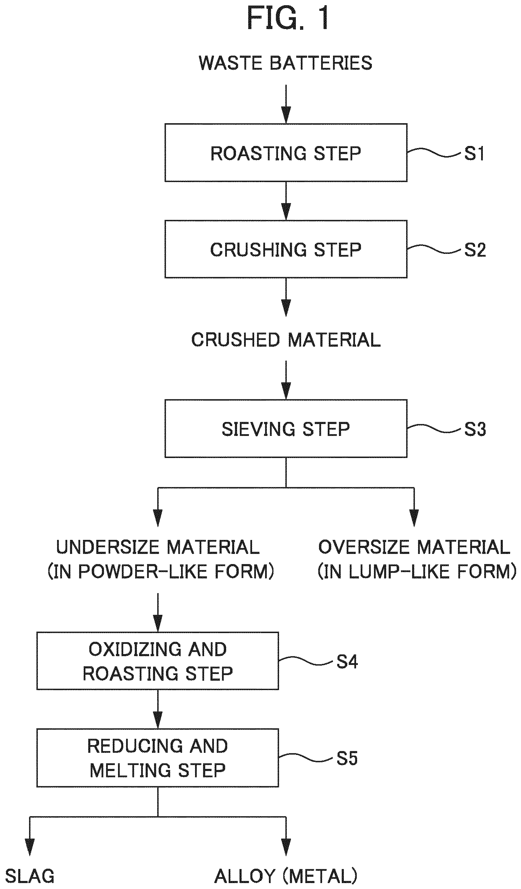

FIG. 1 is a process diagram illustrating an example of a flow of the valuable metal recovery method according to the present embodiment. This valuable metal recovery method includes a roasting step S1 for roasting a waste battery, a crushing step S2 for crushing the roasted material using a chain mill, and a sieving step S3 for subjecting the crushed material to a sieving treatment to separate the crushed material into a lump-like material which is an oversize material, and powder which is an undersize material. Here, the valuable metal such as nickel or cobalt is a metal contained in a positive electrode active material, and is recovered in the powder form, thus is mainly distributed to the undersize material.

Further, the present method further includes an oxidizing and roasting step S4 for oxidizing and roasting the obtained undersize material, and a reducing and melting step S5 for reducing and melting the oxidized and roasted material to obtain slag and an alloy (metal) containing the valuable metal.

Note that, by subjecting the alloy of a valuable metal obtained through such a series of dry treatments to a wet treatment such as a neutralization treatment, a solvent extraction treatment, and an electrolytic collection, impurity components remaining in the alloy are removed, and a valuable metal can be further purified and recovered as a high value-added metal.

### [Roasting Step]

The roasting step S1 mainly aims at removing a fluorine component or the like as an electrolytic solution component contained in waste batteries to detoxify it, and also at facilitating crushing in the next step.

The condition in the roasting treatment is not particularly limited, but is preferably carried out by heating to 700°C or more as the roasting temperature from the viewpoint of reliably detoxifying the waste battery and making the waste battery brittle to facilitate crushing in the next step. The upper limit of the roasting temperature is not particularly limited, but is preferably set to 1200°C or less. If the roasting temperature is too high, a portion of iron or the like mainly contained in an outer shell of the waste battery adheres to an inner wall or the like of a roasting furnace body such as a kiln, which may hinder smooth operation or lead to deterioration of the kiln itself, which is undesirable.

Further, if too many waste batteries to be subjected to the roasting treatment are stacked in the furnace, the waste batteries cannot be sufficiently roasted through to the inside, resulting in uneven roasting. Therefore, from the viewpoint of enabling uniform roasting, it is preferable to select a process amount, a heating performance of the roasting furnace, and the like. For example, it is preferable to perform a preliminary test in advance to determine an optimum temperature and a roasting time.

The heating method at the time of roasting is not particularly limited, and may be an electric type, and may be a burner type using a fuel such as petroleum or gas. In particular, the burner-type heating, which is performed at a low cost, is preferred.

### [Crushing Treatment]

In the crushing step S2, the roasted material obtained by roasting the waste battery in the roasting step S1 is crushed and finely separated. At this time, in the valuable metal recovery method according to the present embodiment, the roasted material is placed into a crushing container and subjected to a crushing treatment using a chain mill.

As described above, by crushing the roasted material using a chain mill as the crushing apparatus, it is possible to make it easier to separate the obtained crushed material into a powdery material containing a large amount of a valuable metal and other impurities which are not the target of recovery. Then, in the sieving step S3, the next step, by sieving the obtained crushed material into an undersize material and an oversize material, it is possible to efficiently recover the valuable metal from the undersize material. Further, since the roasted material can be finely crushed by the crushing treatment using a chain mill, it is possible to prevent the valuable metal from adhering to a lump-like material mainly formed of impurities, to end up with a loss, whereby a decrease in recovery rate can be suppressed.

### (Regarding Chain Mill Equipment)

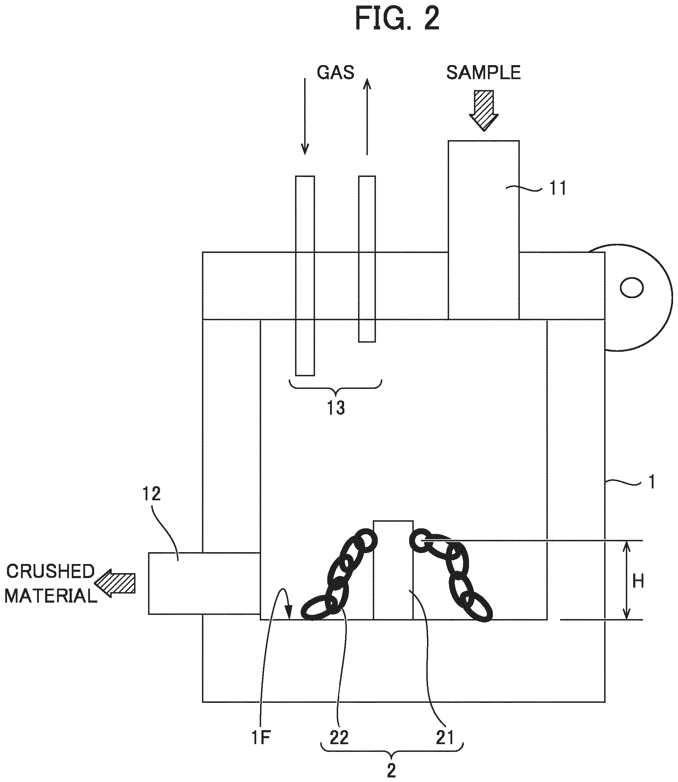

FIG. 2 is a diagram for explaining an example of the crushing treatment using a chain mill. As shown in FIG. 2, the crushing treatment is performed inside a crushing container 1 provided with a chain mill equipment 2. The crushing container 1 includes a sample charging port 11, a sample recovery port 12, and a gas supply and exhaust pipe 13. Further, the chain mill equipment 2 is provided in a treatment space inside the crushing container 1.

In the crushing container 1, a roasted material to be crushed is charged from the sample charging port 11 and is supplied to the chain mill equipment 2 provided in an internal treatment space. The chain mill equipment 2 will be described later. The crushed material obtained after the crushing treatment by the chain mill equipment 2 is recovered from the sample recovery port 12. Further, in the crushing treatment, gas is exhausted and supplied through the gas supply and exhaust pipe 13 provided on the upper portion (ceiling portion) of the crushing container 1, making it possible to control the gaseous atmosphere.

The chain mill equipment 2 includes a rotary shaft rod 21 which is provided vertically with respect to a bottom surface 1F inside the crushing container 1, and a chain 22 mounted to a side surface of the rotary shaft rod 21. In the chain mill equipment 2, when the chain 22 mounted to the rotary shaft rod 21 is rotated, the roasted material, a target of the crushing treatment, collides with the chain 22, whereby the roasted material is crushed to a predetermined size. As described above, since the chain 22 collides with the roasted material to crush the roasted material, the chain mill equipment 2 can crush the roasted material more strongly than any other conventionally known crushing apparatuses.

### •Rotary Shaft Rod

More specifically, the rotary shaft rod 21 has the chain 22, which will be described later, mounted at a predetermined position in the side surface and when the rotary shaft rod 21 rotates around the shaft, the chain mounted to the side surface is rotated in the treatment space. Note that the number of chains to be mounted to the rotary shaft rod 21 is not particularly limited, but is preferably 2 or more. This point will be described later.

The rotary shaft rod 21 is vertically provided from the bottom surface 1F inside the crushing container 1. Therefore, the mounting height of the chain 22 to be mounted to the side surface of the rotary shaft rod 21 (denoted by "H" in FIG. 2) is a height on the basis of the bottom surface 1F of the crushing container 1, and refers to a distance from the bottom surface 1F of the crushing container 1 to the mounting position of the chain 22.

Here, the rotary shaft rod 21 preferably has a structure in which a mounting height H of the chain 22 to be mounted to the side surface thereof is adjustable. In the crushing treatment, it is not sufficient to simply crush the roasted material of the waste battery finely, but it is important in terms of efficiency to make it possible that the valuable metal to be recovered and other impurities not to be recovered can be separated as clearly as possible. For example, if the degree of crushing is too fine due to too strong crushing strength, a large amount of impurities are likely to be distributed to the undersize material, which is obtained in the treatment in the sieving step S3, the next step. On the other hand, if the grinding strength is too weak, even the valuable metal may be entrained in the crushed material which is to be transferred to the oversize material, whereby the recovery rate of the valuable metal may decrease.

The degree of crushing depends on crushing time and crushing energy, but by adjusting the mounting height H of the chain 22 from the bottom surface 1F of the crushing container 1, that is, a chain height, crushing treatment can be performed while controlling the size and crushing shape of the crushed material with high accuracy. Thereby, it is possible to improve the recovery rate of the valuable metal.

There is no particular limitation on the structure in which the mounting height H of the chain 22 can be adjusted in the rotary shaft rod 21, and any structure can be used as long as the position of the mounted chain 22 can be adjusted up and down in the height direction. Specifically, for example, the mounting height can be made automatically or manually adjustable, by providing a movable groove on the side surface of the rotary shaft rod 21.

In the rotary shaft rod 21, the mounting height H of the chain 22 is not particularly limited, but is preferably in a range of 5 mm or more and 300 mm or less, more preferably in a range of 8 mm or more and 200 mm or less, and most preferably in a range of 10 mm or more and 100 mm or less. By mounting the chain 22, adjusting the mounting height H in such a range, it is possible to perform the crushing treatment, by more appropriately controlling the degree of crushing.

### •Chain

The chain 22 is mounted to the side surface of the rotary shaft rod 21 as described above, is rotated by the rotation of the rotary shaft rod 21, and makes the roasted material, the target of crushing, collide therewith to crush the roasted material. The chain 22 is formed by metal rings continuously connected to a predetermined length (see the schematic diagram of FIG. 2).

In the chain mill equipment 2, the number of chains 22 to be mounted to the rotary shaft rod 21 is not particularly limited, but it is preferable to mount two or more chains 22 in the rotation direction. Specifically, when mounting two or more chains in the rotation direction, mounting positions for the chain 22 are provided at a predetermined two or more positions in the rotation direction in the side surface of the rotary shaft rod 21, and the chain 22 is independently mounted to each of the mounting positions. As described above, by performing the crushing treatment by mounting two or more chains 22 to the rotary shaft rod 21, the crushing strength can be increased, and the valuable metal contained in the roasted material can be easily made into a powdery crushed material, whereby the valuable metal can be more efficiently recovered.

In addition, the number of chains 22 mounted in the shaft direction of the rotary shaft rod 21 may be one, or two or more.

As described above, the rotary shaft rod 21 preferably has a structure allowing for adjustment of the mounting height H, at which the chain 22 is mounted to the side surface thereof. Accordingly, the mounting height H (height from the bottom surface 1F of the crushing container 1 to the mounting position of the chain 22) at which the chain 22 is mounted to the side surface of the rotary shaft rod 21 is adjustable. The chain mill equipment 2 having such a structure enables the valuable metal to be recovered and other impurities not to be recovered to be more clearly separated, which results in more efficient recovery of valuable metals.

### [Sieving treatment]

In the sieving step S3, the crushed material obtained by the crushing treatment in the crushing step S2 is separated by sieving into an oversize material and an undersize material, using a sieve (sieving machine) having a predetermined mesh opening. In particular, in the case of the waste battery, a positive electrode active material containing a large amount of valuable metals is crushed to a powder form and distributed to the undersize material. Therefore, it is possible to efficiently recover the valuable metal by separating the crushed material into the oversize material and the undersize material by sieving.

Then, in the valuable metal recovery method according to the present embodiment, since the crushing treatment using a chain mill is performed in the crushing step S2, the previous step, a powdery material containing a large amount of valuable metals can be efficiently obtained. Then, in the sieving step S3, sieving the obtained crushed material into the undersize material and the oversize material makes it easier to separate the powdery material containing a large amount of valuable metals and other impurities, which are not the recovery target, and the valuable metal can be efficiently recovered from the undersize material.

The sieving treatment is not particularly limited and can be performed using a commercially available sieving machine. Mesh opening of a sieve (mesh opening of screen) or the like can be appropriately set based on the conditions of sieving regarding the oversize material and the undersize material. Incidentally, if the mesh opening of the sieve is too large, a large amount of non-valuable metals may be recovered together with the valuable metal in the undersize material, which is not preferable. If the mesh opening of the sieve is too small, a large amount of the valuable metal may be contained in the oversize material, which is not preferable. For example, the mesh opening of the sieve of 5 mm or less is preferable, since the valuable metal can be efficiently recovered.

It is preferable that the sieving machine is placed in a sealed space to constitute a structure in which the crushed material does not scatter around. In this way, by enabling the crushed material to be supplied to the sieving machine in a sealed state, scattering of the powdery material and recovery loss of the valuable metal accompanied therewith can be more efficiently prevented, and such supply is also preferable from the viewpoint of safety and working environment.

### [Oxidizing and Roasting Treatment]

Next, in the oxidizing and roasting step S4, the undersize material obtained in the sieving step S3 is roasted under an oxidizing atmosphere. By the roasting treatment in the oxidizing and roasting step S4, a carbon component (carbon) contained in the undersize material can be oxidized and removed. Specifically, the content of carbon in the oxidized and roasted material obtained is reduced to almost 0% by mass.

As described above, carbon can be removed by roasting under an oxidizing atmosphere, and as a result, molten fine particles of the reduced valuable metal locally generated in the reducing and melting step S5, the next step, can aggregate without being physically obstructed by carbon, whereby the valuable metal can be recovered as an integrated alloy. Further, it is possible to suppress phosphorus contained in the contents of the battery from being reduced by carbon in the reducing and melting step S5, and to effectively oxidize and remove the phosphorus and to suppress the phosphorus from being distributed to the alloy of the valuable metal.

In the oxidizing and roasting step S4, for example, oxidizing and roasting is performed at a temperature (oxidizing and roasting temperature) of 600°C or more. By setting the roasting temperature to 600°C or more, carbon contained in the battery can be effectively oxidized and removed. Further, by setting the roasting temperature to preferably 700°C or more, the treatment time can be shortened. Further, it is preferable to set the upper limit value of the oxidizing and roasting temperature to 900°C or less, whereby thermal energy costs can be suppressed and treatment efficiency can be increased.

The oxidizing and roasting treatment can be carried out using a known roasting furnace. Furthermore, it is preferable to provide a furnace (preliminary furnace) different from the melting furnace used in the melting treatment in the reducing and melting step S5 of the next step and to perform the oxidizing and roasting treatment in the preliminary furnace. As the roasting furnace, any type of kiln capable of performing an oxidation treatment (roasting) inside by heating a crushed material while supplying oxygen can be used. As an example, a known rotary kiln, a tunnel kiln (half furnace), or the like can be suitably used.

### [Reducing and Melting Treatment]

In the reducing and melting step S5, the oxidized and roasted material obtained by the roasting treatment in the oxidizing and roasting step S4 is reduced and melted to obtain slag containing impurities and an alloy (metal) containing the valuable metal. In the reducing and melting step S5, oxides of elemental impurities obtained by oxidation in the oxidizing and roasting treatment are left as they are, and oxides of valuable metals which have been oxidized in the oxidizing and roasting treatment are reduced and melted, whereby the reduced products are separated from the impurities and an alloy in which the reduced products are integrated is obtained. Incidentally, the alloy obtained as a molten product is also referred to as a "molten alloy".

In the reducing and melting step S5, the treatment can be performed, for example, in the presence of carbon. Examples of carbon include a reducing agent having an ability to easily reduce a valuable metal to be recovered, such as nickel, cobalt, or the like. For example, graphite, etc., which is capable of reducing 2 moles of an oxide of a valuable metal such as nickel oxide by 1 mole of carbon can be mentioned. Also, hydrocarbons or the like capable of reducing 2 mol to 4 mol per mol of carbon can be used as a source of carbon. As described above, by reducing and melting in the presence of carbon as a reducing agent, valuable metals can be efficiently reduced and an alloy containing valuable metals can be effectively obtained.

As the carbon, in addition to artificial graphite and natural graphite, coal, coke, or the like can be used as long as impurities are contained in an acceptable amount in the products or post-processes. Further, in the reducing and melting treatment, it is desirable to appropriately adjust an existing amount of carbon. Specifically, the oxidized and roasted material is preferably melted in the presence of carbon in a ratio of more than 7.5% by mass and 10% by mass or less, and more preferably, in a ratio of 8.0% by mass or more and 9.0% by mass or less, based on 100% by mass of the oxidized and roasted material which is a treatment target.

The temperature condition (melting temperature) in the reducing and melting treatment is not particularly limited, but is preferably set in a range of 1320°C or more and 1600°C or less, and more preferably in a range of 1450°C or more and 1550°C or less. In addition, in the reducing and melting treatment, an oxide-based flux may be added and used. Note that, in the reducing and melting treatment, dust, exhaust gas, and the like may be generated, but can be detoxified by performing conventionally known exhaust gas treatment.

### EXAMPLES

Hereinafter, the present invention will be described more specifically using Examples and Comparative Examples, but the present invention is not limited in any way to the following Examples.

### [Examples and Comparative Examples]

### (Roasting Step)

As the waste battery, used on-vehicle lithium-ion batteries having a square external shape were provided. These waste batteries were roasted at a temperature of 920°C under an ambient atmosphere over a period of 6 hours.

### (Crushing Step)

Next, in the crushing step, the roasted material obtained from the roasting step was placed in a crushing container in a portion of 10 kg per 1 batch, and the crushing treatment was performed using a chain mill as the crusher (see schematic diagram of FIG. 2). Specifically, in Examples 1 to 10, the treatment was performed under the crushing conditions indicated in Table 1 below. Note that in Examples 8 to 10, the crushing treatment was carried out by setting the number of mounting positions of the chain to four, and mounting two chains in each of two patterns with respect to the mounting height position.

On the other hand, in Comparative Example 1, the crushing treatment was carried out using a biaxial crusher as the crusher.

In each of the Examples and Comparative Examples, the crushed material obtained by crushing was collected and subjected as it is to a sieving machine used for the sieving treatment in the next step.

### (Sieving Treatment)

Next, in the sieving step, the crushed material of 1 batch collected from the crusher was weighed and subjected to a sieving machine using, as the sieve, a metal (stainless steel) plate having a large number of holes each having a diameter of 2.0 mm to sieve.

The sieved products obtained by the sieving treatment as described above were separated into a powdery undersize material and a lump-like oversize material and each of them was collected. Each of the collected products was subjected to analysis using a commercially available ICP emission spectrometer to determine contents of nickel and cobalt and obtain distribution of nickel and cobalt to the undersize material and the oversize material.

### [Results]

Table 1 below shows the measurement results of the distribution rates of nickel and cobalt based on the content analysis values of nickel and cobalt of each of the undersize material and the oversize material in Examples 1 to 10 and Comparative Example 1.

**[Table 1]**

| | Crusher | Chain mounting height H (mm) | Number of mounting positions | Crushing time (second) | Distribution of recovered materials (%) | | | |
|---|---|---|---|---|---|---|---|---|
| | | | | | Nickel | | Cobalt | |
| | | | | | Undersize material (in powder-like form) | Oversize material (in lump-like form) | Undersize material (in powder-like form) | Oversize material (in lump-like form) |
| Example 1 | Chain mill | 8 | 2 | 40 | 91.1 | 8.9 | 91.2 | 8.8 |
| Example 2 | Chain mill | 20 | 2 | 40 | 92.5 | 7.5 | 92.4 | 7.6 |
| Example 3 | Chain mill | 50 | 2 | 40 | 93.8 | 6.2 | 93.6 | 6. 4 |
| Example 4 | Chain mill | 90 | 2 | 40 | 93.1 | 6.9 | 93.0 | 7.0 |
| Example 5 | Chain mill | 130 | 2 | 40 | 92.4 | 7.6 | 92.2 | 7.8 |
| Example 6 | Chain mill | 180 | 2 | 40 | 91.7 | 8.3 | 91.6 | 8.4 |
| Example 7 | Chain mill | 300 | 2 | 40 | 90.8 | 9.2 | 90.6 | 9.4 |
| Example 8 | Chain mill | 5, 20 | 4 | 30 | 93.0 | 7.0 | 93.3 | 6.7 |
| Example 9 | Chain mill | 30, 120 | 4 | 30 | 94.2 | 5.8 | 95.1 | 4.9 |
| Example 10 | Chain mill | 150, 300 | 4 | 30 | 93.9 | 6.1 | 94.5 | 5.5 |
| Comparative Example 1 | Biaxial crusher | - | - | 40 | 81.5 | 18.8 | 82.4 | 17.6 |

As shown in Table 1, in Examples 1 to 10 in which the crushing treatment was carried out using the chain mill, it can be seen that nickel and cobalt, which are valuable metals, were more preferentially distributed to the undersize material and thus separation was efficiently carried out. Furthermore, it was found that the crushing can be controlled by changing the mounting height H of the chain, because there was a difference in the distribution rates of each of nickel and cobalt in the chain mill equipment depending on the position of the mounting height H of the chain. It was found that especially when the mounting height H of the chain was 50 mm and 90 mm, the distribution rate of each of nickel and cobalt was improved, and the valuable metal could be efficiently recovered.

On the other hand, in Comparative Example 1, the distribution rates of nickel and cobalt in the undersize material decreased as compared with the Examples.

### EXPLANATION OF REFERENCE NUMERALS

1 Crushing container
1F Bottom surface (bottom surface inside the crushing container)
11 Sample charging port
12 Sample recovery port
13 Gas supply and exhaust pipe
2 Chain mill equipment
21 Rotary shaft rod
22 Chain

## Claims

1. A method for recovering a valuable metal from a waste battery, comprising:
roasting a waste battery,
placing a roasted material into a crushing container and crushing the roasted material using a chain mill, and
sieving a crushed material to separate into an oversize material and an undersize material;
wherein the chain mill used in a crushing treatment in the crushing step comprises:
a rotary shaft rod provided vertically with respect to a bottom surface of the crushing container, and
a chain mounted to a side surface of the rotary shaft rod,
wherein the chain mill has a structure in which a mounting height of the chain to the rotary shaft rod is adjustable, and
wherein the chain is mounted to a mounting position located at a distance in a range of 10 mm or more and 100 mm or less from the bottom surface of the crushing container.

2. The method for recovering a valuable metal from a waste battery according to claim 1,
wherein the chain mill is provided with two or more mounting positions in a rotational direction thereof on the side surface of the rotary shaft rod, and the chain is mounted to each of the mounting positions.

3. The method for recovering a valuable metal from a waste battery according to claim 1 or 2,
further comprising oxidizing and roasting the undersize material, and
reducing and melting an oxidized and roasted material to obtain slag and an alloy comprising the valuable metal.

4. The method for recovering a valuable metal from a waste battery according to any one claims 1 to 3,
wherein the valuable metal comprises at least one or more selected from the group consisting of cobalt, nickel, and copper.

## Patentansprüche

1. Verfahren zur Rückgewinnung eines wertvollen Metalls aus einer Altbatterie, umfassend:
Rösten einer Altbatterie,
Platzieren eines gerösteten Materials in einen Zerkleinerungsbehälter und Zerkleinern des gerösteten Materials unter Verwendung einer Kettenmühle und
Sieben eines zerkleinerten Materials, um es in ein übergroßes Material und ein untergroßes Material zu trennen,
wobei die Kettenmühle, die bei einer Zerkleinerungsbehandlung im Zerkleinerungsschritt verwendet wird, umfasst:
eine Drehwellenstange, die vertikal in Bezug auf eine Bodenfläche des Zerkleinerungsbehälters vorgesehen ist, und
eine Kette, die an einer Seitenfläche der Drehwellenstange montiert ist,
wobei die Kettenmühle eine Struktur aufweist, bei der eine Montagehöhe der Kette an der Drehwellenstange einstellbar ist, und
wobei die Kette an einer Montageposition montiert ist, die in einem Abstand in einem Bereich von 10 mm oder mehr und 100 mm oder weniger von der Bodenfläche des Zerkleinerungsbehälters angeordnet ist.

2. Verfahren zur Rückgewinnung eines wertvollen Metalls aus einer Altbatterie nach Anspruch 1,
wobei das Kettenwerk mit zwei oder mehr Montagepositionen in seiner Drehrichtung auf der Seitenfläche der Drehwellenstange versehen ist und die Kette an jeder der Montagepositionen montiert ist.

3. Verfahren zur Rückgewinnung eines wertvollen Metalls aus einer Altbatterie nach Anspruch 1 oder 2,
ferner umfassend das Oxidieren und Rösten des Unterkornmaterials und
das Reduzieren und Schmelzen eines oxidierten und gerösteten Materials, um Schlacke und eine Legierung zu erhalten, die das wertvolle Metall enthält.

4. Verfahren zur Rückgewinnung eines wertvollen Metalls aus einer Altbatterie nach einem der Ansprüche 1 bis 3,
wobei das wertvolle Metall mindestens ein oder mehrere Elemente umfasst, die aus der Gruppe ausgewählt sind, bestehend aus Kobalt, Nickel und Kupfer.

## Revendications

1. Procédé de récupération d'un métal précieux à partir d'une batterie usagée, comprenant les étapes consistant à :
calciner une batterie usagée,
placer un matériau calciné dans un récipient de broyage et broyer le matériau calciné en utilisant un broyeur à chaîne, et
tamiser un matériau broyé pour le séparer en un matériau surdimensionné et un matériau sous-dimensionné ;
dans lequel le broyeur à chaîne utilisé dans un traitement de broyage dans l'étape de broyage comprend :
une tige d'arbre rotative prévue verticalement par rapport à une surface inférieure du récipient de broyage, et
une chaîne montée sur une surface latérale de la tige d'arbre rotative,
dans lequel le broyeur à chaîne présente une structure dans laquelle une hauteur de montage de la chaîne sur la tige d'arbre rotative est ajustable, et
dans lequel la chaîne est montée sur une position de montage située à une distance dans une plage de 10 mm ou plus et de 100 mm ou moins à partir de la surface inférieure du récipient de broyage.

2. Procédé de récupération d'un métal précieux à partir d'une batterie usagée selon la revendication 1,
dans lequel le broyeur à chaîne est pourvu de deux positions de montage ou plus dans une direction de rotation de celui-ci sur la surface latérale de la tige d'arbre rotatif, et la chaîne est montée sur chacune des positions de montage.

3. Procédé de récupération d'un métal précieux à partir d'une batterie usagée selon la revendication 1 ou 2,
comprenant en outre l'oxydation et la calcination du matériau sous-dimensionné, et
la réduction et la fusion d'un matériau oxydé et calciné pour obtenir des scories et un alliage comprenant le métal précieux.

4. Procédé de récupération d'un métal précieux à partir d'une batterie usagée selon l'une quelconque des revendications 1 à 3,
dans lequel le métal précieux comprend au moins un ou plusieurs choisis dans le groupe comprenant cobalt, nickel et cuivre.
